# FASCICULE DE BREVET EUROPEEN

(11) **EP 2 859 633 B1**
(45) Date de publication et mention de la délivrance du brevet: **10.08.2016**
(21) Numéro de dépôt: 13731401.9
(22) Date de dépôt: 07.06.2013
(51) Int. Cl.: H02G 15/184, H02G 15/107

(54) **DISPOSITIF COMPRENANT UNE COUCHE PIÉGEUSE DE CHARGES D'ESPACE**
VORRICHTUNG MIT EINER LADUNGSBLOCKIERUNGSSCHICHT
DEVICE WITH A CHARGE SEALING LAYER

(30) Priorité: 08.06.2012 FR 1255352
(43) Date de publication de la demande: 15.04.2015
(73) Titulaire: Nexans, 75008 Paris (FR)
(72) Inventeur: SAUGRAIN, Jean-Maxime, F-78110 Le Vesinet (FR); MIREBEAU, Pierre, F-91140 Villebon sur Yvette (FR)
(74) Mandataire: Peguet, Wilfried
(86) Numéro de dépôt international: PCT/FR2013/051328
(87) Numéro de publication internationale: WO 2013/182829

(56) Documents cités:
- EP-A1- 0 660 483
- EP-A1- 1 280 167
- WO-A1-2010/149229
- FR-A- 1 077 452
- FR-A1- 2 736 218

## Description

La présente invention se rapporte à un dispositif comprenant un câble électrique et/ou un accessoire pour câble électrique, ainsi qu'une couche piégeuse de charges d'espace.

Elle s'applique typiquement, mais non exclusivement, aux domaines des câbles d'énergie et de leurs accessoires, pour le transport de courant continu.

Les câbles d'énergie sont typiquement des câbles à moyenne tension (notamment de 6 à 45-60 kV) ou à haute tension (notamment supérieur à 60 kV, et pouvant aller jusqu'à 800 kV), notamment à courant continu (i.e. tension continue).

Les câbles d'énergie à moyenne ou haute tension comprennent typiquement un conducteur électrique central allongé et, successivement et coaxialement autour de ce conducteur électrique, une première couche semi-conductrice (ou couche interne), une couche électriquement isolante, et une seconde couche semi-conductrice (ou couche externe). Ces couches sont à base de polymère(s) et peuvent être réticulées ou non.

Les accessoires des câbles d'énergie peuvent être par exemple une jonction ou une terminaison pour câble d'énergie, ces accessoires comprennent classiquement un ou plusieurs éléments semi-conducteurs.

La discontinuité des propriétés électriques entre les éléments semi-conducteurs desdits accessoires et la couche électriquement isolante de ce type de câble peut entrainer un renforcement local du champ électrique par accumulation de charges d'espace ou d'espèces chargées sous l'action d'un champ électrique.

Ce champ électrique localisé à l'interface entre l'accessoire et le câble peut ainsi mener au claquage du câble électrique et/ou de l'accessoire concerné(s), et constitue donc une menace considérable pour la fiabilité du réseau de transport d'énergie avec des conséquences économiques bien connues engendrées la non disponibilité de l'énergie électrique. Un dispositif pour le transport de courant continu est connu de WO2010/149229A1.

Le but de la présente invention est de pallier les inconvénients des techniques de l'art antérieur en proposant notamment un dispositif comprenant un câble électrique destiné à être associé à un accessoire pour câble électrique, ou comprenant un accessoire pour câble électrique destiné à être associé à un câble électrique, permettant de piéger les charges d'espace, et ainsi de limiter de façon significative, voire d'éviter, les claquages électriques à l'interface entre ledit câble et ledit accessoire.

La présente invention a pour premier objet un dispositif comprenant au moins un câble électrique comprenant un conducteur électrique allongé entouré par au moins une première couche semi-conductrice, une couche électriquement isolante entourant la première couche semi-conductrice, et une seconde couche semi-conductrice entourant la couche électriquement isolante, caractérisé en ce que le câble électrique comprend en outre une couche piégeuse de charges d'espace obtenue à partir d'une composition polymérique comprenant au moins un polymère organique et au moins une charge linéaire, la couche piégeuse de charges d'espace remplaçant au moins en partie la seconde couche semi-conductrice du câble électrique, de sorte que la couche piégeuse de charges d'espace soit en contact physique avec la couche électriquement isolante du câble électrique.

Plus particulièrement, lorsque le câble électrique est associé à un accessoire pour câble électrique, ledit accessoire comprenant au moins un élément semi-conducteur, la couche piégeuse de charges d'espace est notamment destinée à être en contact physique au moins partiellement avec l'élément semi-conducteur de l'accessoire.

La présente invention a pour deuxième objet un dispositif comprenant un accessoire pour câble électrique, ledit accessoire comprenant au moins un élément semi-conducteur et étant destiné à être associé à au moins un câble électrique, ledit câble électrique comprenant un conducteur électrique allongé entouré par au moins une première couche semi-conductrice, une couche électriquement isolante entourant la première couche semi-conductrice, et une seconde couche semi-conductrice entourant la couche électriquement isolante, caractérisé en ce que l'accessoire comprend en outre une couche piégeuse de charges d'espace obtenue à partir d'une composition polymérique comprenant au moins un polymère organique et au moins une charge linéaire, la couche piégeuse de charges d'espace étant destinée à remplacer au moins en partie la seconde couche semi-conductrice du câble électrique, de sorte que la couche piégeuse de charges d'espace soit susceptible d'être en contact physique avec la couche électriquement isolante du câble électrique.

Plus particulièrement, la couche piégeuse de charges d'espace peut être en contact physique au moins partiellement avec l'élément semi-conducteur de l'accessoire.

La présente invention a pour troisième objet un dispositif comprenant :
- au moins un câble électrique comprenant un conducteur électrique allongé entouré par au moins une première couche semi-conductrice, une couche électriquement isolante entourant la première couche semi-conductrice, et une seconde couche semi-conductrice entourant la couche électriquement isolante, et
- un accessoire pour câble électrique comprenant au moins un élément semi-conducteur, ledit câble électrique étant associé audit accessoire,
caractérisé en ce que le dispositif comprend en outre une couche piégeuse de charges d'espace, positionnée entre la couche électriquement isolante du câble électrique et ledit élément semi-conducteur de l'accessoire, la couche piégeuse de charges d'espace étant obtenue à partir d'une composition polymérique comprenant au moins un polymère organique et au moins une charge linéaire.

De préférence, la couche piégeuse de charges d'espace remplace au moins en partie la seconde couche semi-conductrice du câble électrique, de sorte que la couche piégeuse de charges d'espace soit en contact physique au moins partiellement avec la couche électriquement isolante du câble électrique, et/ou en contact physique au moins partiellement avec l'élément semi-conducteur de l'accessoire.

La présente invention a pour quatrième objet un dispositif comprenant au moins un câble électrique, ledit câble électrique comprenant un conducteur électrique allongé entouré par au moins une première couche semi-conductrice, une couche électriquement isolante entourant la première couche semi-conductrice, et une seconde couche semi-conductrice entourant la couche électriquement isolante, caractérisé en ce que le câble électrique comprend en outre une couche piégeuse de charges d'espace entourant la couche électriquement isolante, et étant entourée par la seconde couche semi-conductrice, la couche piégeuse de charges d'espace étant obtenue à partir d'une composition polymérique comprenant au moins un polymère organique et au moins une charge linéaire.

Cette couche piégeuse de charges d'espace s'étend préférentiellement tout le long du câble électrique, et est notamment une couche extrudée le long du câble électrique.

Plus particulièrement, la couche piégeuse de charges d'espace peut être en contact physique avec la couche électriquement isolante et avec la seconde couche semi-conductrice.

Dans un mode de réalisation particulier, lorsque le câble électrique est associé à un accessoire pour câble électrique, ledit accessoire comprenant au moins un élément semi-conducteur, la couche piégeuse de charges d'espace est destinée à être en contact physique avec l'élément semi-conducteur de l'accessoire.

Pour se faire, l'homme du métier pourra simplement dénuder une partie du câble électrique, en enlevant notamment une partie de la seconde couche semi-conductrice, afin d'avoir accès à la couche piégeuse de charges d'espace.

Le câble électrique défini dans le quatrième objet de l'invention peut être utilisé dans les dispositifs du premier, du deuxième et/ou du troisième objet de l'invention.

Dans un mode de réalisation particulier de l'invention, la couche piégeuse de charges d'espace est destinée à être positionnée entre la couche électriquement isolante du câble électrique et l'élément semi-conducteur de l'accessoire pour câble électrique avec lequel il est associé, en configuration opérationnelle. En d'autres termes, la couche électriquement isolant du câble électrique n'est ainsi pas en contact physique avec le ou les éléments semi-conducteur(s) de l'accessoire pour câble électrique, en configuration opérationnelle du dispositif de l'invention.

Grâce à la présente invention, la couche piégeuse de charges d'espace permet à la couche électriquement isolante du câble électrique de ne pas être en contact physique avec ledit élément semi-conducteur de l'accessoire.

De préférence, la couche piégeuse de charges d'espace permet à la couche électriquement isolante du câble électrique de ne pas être en contact physique avec tous les éléments semi-conducteurs constitutifs de l'accessoire avec lesquels ladite couche électriquement isolante serait susceptible d'être en contact physique si la couche piégeuse de charges d'espaces n'était pas présente.

La présente invention permet avantageusement de limiter de façon significative, voire d'éviter, les claquages électriques susceptibles d'être initiés à l'interface entre le câble électrique et l'accessoire associé avec ledit câble, notamment lorsque le câble électrique est utilisé pour le transport de courant continu.

On entend par « couche piégeuse de charges d'espace » une couche comportant un nombre important de pièges. Dans la présente invention, ces pièges (au sens des matériaux semi-conducteurs) ont un niveau d'énergie situé entre la bande de valence et la bande de conduction. Ils permettent de fixer les porteurs de charges électriques présents dans le matériau, et peuvent être typiquement de 0,4eV en dessous de la bande de conduction.

On entend par « charge linéaire » une charge dont la résistivité sous tension continue est sensiblement indépendante du champ électrique appliqué.

On entend par «semi-conductrice» ou «semi-conducteur» une couche ou un élément ayant de préférence une résistivité électrique d'au plus 1000 Ω.m (ohm-métre) à 20°C, et de préférence une résistivité électrique d'au moins 0,5 Ω.m à 20°C, mesurée selon la norme CEI 60840.

On entend par « électriquement isolant(e) » une couche ou un élément dont la conductivité électrique peut être préférentiellement d'au plus 1.10⁻⁹ S/m (siemens par mètre) à 25°C.

On entend par « contact physique » entre un élément A et un élément B, tout contact direct entre les éléments A et B, sans élément intermédiaire intercalé entre lesdits éléments A et B.

Lorsque l'on mentionne que le câble électrique est associé ou est destiné à être associé à un accessoire pour câble électrique, ou que l'accessoire pour câble électrique est associé ou est destiné à être associé à un câble électrique, cela signifie plus particulièrement que c'est au moins une des extrémités du câble électrique qui est associée ou qui est destinée à être associée audit accessoire.

Lorsque le dispositif comprend plusieurs câbles électriques, chacun desdits câbles électriques comprend une extrémité qui est associée ou qui est destinée à être associé audit accessoire.

De préférence, la couche piégeuse de charges d'espace n'est pas reliée électriquement au potentiel électrique le plus haut du câble électrique, tel que par exemple le conducteur électrique du câble électrique. De ce fait, elle n'a notamment pas pour objet de contrôler le champ électrique.

La charge linéaire de la présente invention peut être un matériau ayant avantageusement une constante diélectrique ε qui est au moins supérieure à celle du ou des polymère(s) organique (s), et de préférence une constante diélectrique ε qui est au moins deux fois supérieure à celle du ou des polymère(s) organique(s).

En effet, plus la valeur de la constante diélectrique du polymère organique est éloignée de la valeur de la constante diélectrique de la charge linéaire, mieux les charges d'espace seront piégées.

La constante diélectrique ε est défini par rapport à la constante diélectrique du vide, et est déterminée classiquement par la méthode ASTM D 150.

Selon l'invention, la charge linéaire est de préférence une charge qui est peu ou pas hygroscopique, ou en d'autres termes ce peut être une charge qui absorbe (ou bien adsorbe) peu ou pas l'humidité. Le caractère hygroscopique de la charge linéaire peut ainsi être minimal.

Selon un premier mode de réalisation particulier, la charge linéaire peut comprendre des nanoparticules.

La présence de nanoparticules en tant que charge linéaire, permet avantageusement de limiter significativement, voire d'éviter, les phénomènes d'agrégation entre les charges elles-mêmes dans la composition polymérique.

On entend par « nanoparticules » des charges dont au moins une de leurs dimensions est de taille nanométrique, et de préférence au moins une de leurs dimensions est d'au plus 100 nm.

La charge linéaire peut être une charge sensiblement non sphérique, telle que l'on pourrait l'observer avec un microscope électronique à balayage, de façon à présenter la plus grande surface spécifique possible. A titre d'exemple, la charge linéaire peut être du noir de carbone, et de préférence du noir de carbone non sphérique (i.e. noir de carbone dit « au four »). Le noir de carbone revêt notamment lesdites différentes propriétés, à savoir il est peu hygroscopique, il peut être nanométrique et il peut être non sphérique.

Selon un deuxième mode de réalisation particulier, le polymère organique et la charge linéaire peuvent former un polymère organique fonctionnalisé.

Ledit polymère organique fonctionnalisé, remplaçant l'ensemble formé par le polymère organique et la charge linéaire, comprend une chaîne macromoléculaire et au moins un groupement fonctionnel, de sorte que la chaîne macromoléculaire du polymère est utilisée en tant que polymère organique, et que le groupement fonctionnel est utilisé en tant que charge linéaire.

De ce fait, la constante diélectrique ε du groupement fonctionnel est au moins supérieure à celle de la chaîne macromoléculaire du polymère fonctionnalisé, et de préférence la constante diélectrique ε du groupement fonctionnel est au moins deux fois supérieure à celle de la chaîne macromoléculaire du polymère fonctionnalisé.

A titre d'exemple, le polymère organique fonctionnalisé, remplaçant le polymère organique et la charge linéaire, peut être un copolymère d'éthylène et d'acétate de vinyle (EVA), ou un copolymère d'éthylène et d'acrylate de butyle (EBA). Dans l'EVA, c'est la fonction acétate de vinyle qui joue le rôle de charge linéaire, et dans l'EBA, c'est la fonction acrylate de butyle qui joue le rôle de charge linéaire.

Selon un troisième mode de réalisation particulier, la charge linéaire peut comprendre un polymère différent du polymère organique de la composition polymérique de l'invention. La composition comprend donc ledit polymère organique et un autre polymère en tant que charge linéaire.

A titre d'exemple, la charge linéaire peut être un caoutchouc nitrile butadiène hydrogéné (HNBR).

Le premier et le deuxième modes de réalisation particuliers sont particulièrement avantageux car ils limitent significativement, voire évitent, la présence d'impureté ioniques au sein de la couche piégeuse de charges d'espace. Ainsi, une fois le dispositif en configuration opérationnelle, les problèmes de claquage électrique sont limités de façon optimale.

Selon l'invention, la couche piégeuse de charges d'espace peut avoir avantageusement une résistivité électrique d'au moins 10¹³ Ω.m à 20°C, et de préférence d'au moins 10¹⁸ Ω.m à 20°C, mesurée selon la norme CEI 60840.

La composition polymérique peut comprendre au plus 10% en poids de charge linéaire, de préférence au plus 2% en poids de charge linéaire, et de façon particulièrement préférée au plus 1% en poids de charge linéaire.

La couche piégeuse de charges d'espace peut quant à elle être de même nature polymérique que celle de la couche électriquement isolante du câble, de sorte à pouvoir garantir une adhésion optimale entre la couche piégeuse de charges d'espace et la couche électriquement isolante du câble électrique.

La nature polymérique de la couche piégeuse de charges d'espace est plus particulièrement définie par le ou les polymères organiques qui composent la composition polymérique permettant d'obtenir la couche piégeuse de charges d'espace.

A titre d'exemple, la couche piégeuse de charges d'espace peut être une couche thermoplastique (non réticulée), thermodure (réticulée), ou élastomère. Elle peut également être polaire ou apolaire.

Ainsi, sa nature polymérique peut être avantageusement choisie en fonction de la nature polymérique de la couche électriquement isolante du câble électrique, à savoir : lorsque la couche électriquement isolante du câble électrique est une couche thermoplastique, la couche piégeuse de charges d'espace est une couche thermoplastique ; lorsqu'elle est une couche thermodure, la couche piégeuse de charges d'espace est une couche thermodure ; lorsqu'elle est une couche élastomère, la couche piégeuse de charges d'espace est une couche élastomère.

Dans la présente invention, le polymère organique peut être préférentiellement une polyoléfine du type homopolymère ou copolymère d'oléfine.

Selon la nature polymérique de la couche électriquement isolante du câble électrique, on préférera utiliser notamment un polymère d'éthylène (homo- ou copolymère d'éthylène) ou un polymère de propylène (homo- ou copolymère de propylène).

A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), d'acrylate d'éthyle (EEA) les copolymères d'éthylène et d'alpha-oléfines, les polyéthylène-butène (PEB), les copolymères d'éthylène et de propylène (EPR) tels que par exemple les terpolymères d'éthylène propylène diène (EPDM), et leurs mélanges.

La composition polymérique de l'invention peut comprendre plus de 50,0 parties en poids de polymère organique pour 100 parties en poids de polymère(s) dans la composition, de préférence au moins 70 parties en poids de polymère organique pour 100 parties en poids de polymère(s) dans ladite composition, et de façon particulièrement préférée au moins 90 parties en poids de polymère organique pour 100 parties en poids de polymère(s) dans ladite composition.

De façon particulièrement avantageuse, le ou les polymères constitutifs de la composition polymérique sont uniquement un ou des polymères organiques, et de préférence uniquement une ou des polyoléfines.

La composition polymérique selon l'invention peut comprendre en outre au moins un agent de protection tel qu'un antioxydant.

D'autres additifs et/ou d'autres charges bien connus de l'homme du métier peuvent également être ajoutés à la composition polymérique de l'invention tels que des retardateurs de grillage ; des agents favorisants la mise en oeuvre tels que des lubrifiants ou des cires ; des agents compatibilisants ; et/ou des agents de couplage.

La composition polymérique de l'invention peut être réticulée par des techniques bien connues de l'homme du métier. Par exemple, la composition polymérique pourra comprendre en outre un agent de réticulation tel qu'un générateur de radicaux libres, comme par exemple un peroxyde organique.

Lorsqu'un peroxyde organique est utilisé, il est préférable de rajouter dans la composition polymérique un agent permettant d'augmenter l'efficacité dudit peroxyde organique en présence de ladite charge linéaire. Cet agent est bien connu de l'homme du métier et peut être par exemple le tri allyl cyanurate.

Dans un mode de réalisation particulier du câble électrique de l'invention, la première couche semi-conductrice, la couche électriquement isolante et la deuxième couche semi-conductrice constituent une isolation tricouche. En d'autres termes, la couche électriquement isolante est directement en contact physique avec la première couche semi-conductrice, et la deuxième couche semi-conductrice est directement en contact physique avec la couche électriquement isolante.

Le câble électrique de l'invention peut comprendre d'autres éléments entourant la deuxième couche semi-conductrice, ces autres éléments étant bien connus de l'homme du métier.

L'accessoire pour câble électrique, de l'invention, entoure plus particulièrement, au moins une desdites extrémités dudit câble, ladite extrémité étant celle qui est associée ou qui est destinée à être associée audit accessoire.

Lorsque le dispositif comprend plusieurs câbles électriques selon l'invention, chacun desdits câbles électriques comprend une extrémité qui est associée ou qui est destinée à être associé audit accessoire. De ce fait, l'accessoire pour câble électrique entoure notamment ladite extrémité de chacun desdits câbles.

A titre d'exemple, l'accessoire pour câble électrique de l'invention peut être une jonction ou une terminaison, ces deux types d'accessoire étant bien connus de l'homme du métier.

La jonction pour câble électrique permet de connecter ensemble deux câbles électriques, la jonction entourant ces deux câbles électriques. Plus particulièrement, l'extrémité de chaque câble électrique destinée à être connectée est positionnée à l'intérieur de ladite jonction.

A ladite extrémité de chaque câble électrique, parmi la première couche semi-conductrice, la couche électriquement isolante et la deuxième couche semi-conductrice, la deuxième couche semi-conductrice du câble est au moins partiellement dénudée afin que la couche électriquement isolante soit au moins partiellement positionnée à l'intérieur de la jonction, sans être recouverte de la deuxième couche semi-conductrice du câble.

La jonction comporte un ou plusieurs éléments semi-conducteur(s) qui entourent l'extrémité de chaque câble électrique destinée à être connectée. Cet ou ces éléments semi-conducteur(s) sont bien connus pour contrôler la géométrie du champ électrique, lorsque le dispositif est sous tension.

La terminaison pour câble électrique entoure un câble électrique. Plus particulièrement, l'extrémité du câble électrique est positionnée à l'intérieure de ladite terminaison.

A ladite extrémité du câble électrique, parmi la première couche semi-conductrice, la couche électriquement isolante et la deuxième couche semi-conductrice, la deuxième couche semi-conductrice du câble est au moins partiellement dénudée afin que la couche électriquement isolante soit au moins partiellement positionnée à l'intérieur de la terminaison, sans être recouverte de la deuxième couche semi-conductrice du câble.

La terminaison comporte un élément semi-conducteur qui entoure le câble électrique. Cet élément semi-conducteur est bien connu pour contrôler la géométrie du champ électrique, lorsque le dispositif est sous tension.

Dans un mode de réalisation particulier de l'invention faisant notamment référence aux premier, deuxième et/ou troisième objets de l'invention, la couche piégeuse de charges d'espace entoure la couche électriquement isolante du câble électrique. Elle se présente de préférence comme une couche rubanée au moins partiellement autour de la couche électriquement isolante du câble électrique. Cette couche rubanée peut avoir une partie recouvrant la seconde couche semi-conductrice du câble électrique, ou une partie étant recouverte par la seconde couche semi-conductrice du câble électrique.

Dans un autre mode de réalisation particulier de l'invention, la couche piégeuse de charges d'espace peut être également positionnée sur l'accessoire. Elle peut être préparée sur le mandrin intérieur de l'appareil de moulage de l'accessoire. L'accessoire est ensuite moulé conventionnellement sur le mandrin ainsi modifié. Enfin, le mandrin est retiré.

Selon l'invention, l'épaisseur de la couche piégeuse de charges d'espace en contact physique avec la couche électriquement isolante du câble électrique peut être sensiblement constante le long du dispositif. A titre d'exemple, elle peut avoir une épaisseur d'au moins 0,5 mm.

Plus particulièrement, lorsque la couche piégeuse comprend une ou des portions recouvrant en outre au moins en partie la seconde couche semi-conductrice d'un câble, ladite portion peut avoir une épaisseur inférieure à celle de la couche piégeuse de charges d'espace en contact physique avec la couche électriquement isolante du câble électrique.

D'autres caractéristiques et avantages de la présente invention apparaîtront à la lumière des exemples qui vont suivre en référence aux figures annotées, lesdits exemples et figures étant donnés à titre illustratif et nullement limitatif.
La figure 1 représente une vue schématique d'un dispositif selon l'invention, comprenant une jonction en coupe longitudinale, cette jonction entourant l'extrémité de deux câbles électriques.
La figure 2a représente une vue schématique d'un dispositif selon une première variante de l'invention, comprenant une terminaison en coupe longitudinale, cette terminaison entourant l'extrémité d'un unique câble électrique.
La figure 2b représente une vue schématique d'un dispositif selon une seconde variante de l'invention, comprenant une terminaison en coupe longitudinale, cette terminaison entourant l'extrémité d'un unique câble électrique.
La figure 3 représente une vue schématique d'un dispositif selon l'invention, comprenant un câble électrique avec une couche piégeuse de charges d'espace s'étendant tout le long dudit câble.

Pour des raisons de clarté, les mêmes éléments ont été désignés par des références identiques. De même, seuls les éléments essentiels pour la compréhension de l'invention ont été représentés de manière schématique, et ceci sans respect de l'échelle.

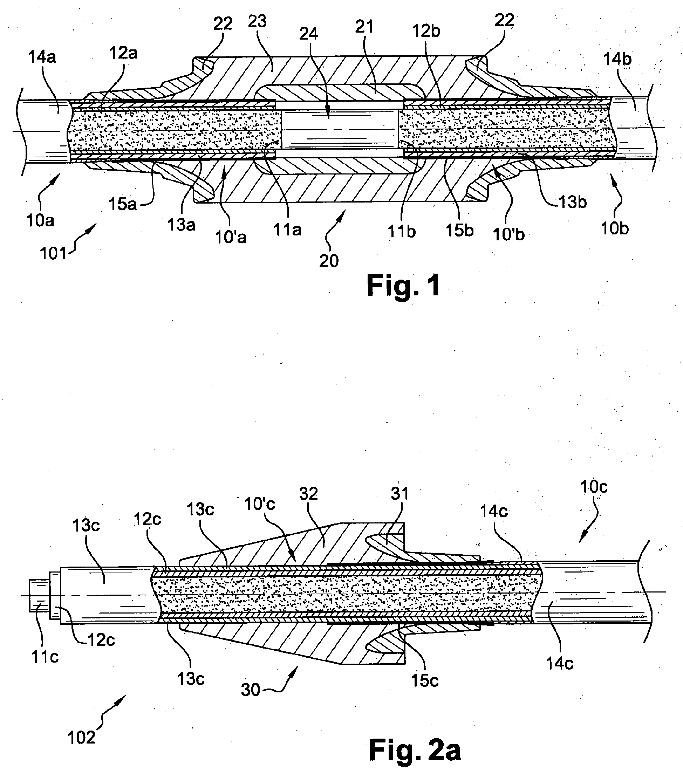

La figure 1 représente un dispositif 101 comprenant :
- un premier câble électrique 10a comprenant un conducteur électrique 11a entouré par une première couche semi-conductrice (non représentée), une couche électriquement isolante 13a entourant la première couche semi-conductrice, et une seconde couche semi-conductrice 14a entourant la couche électriquement isolante, et
- un second câble électrique 10b comprenant un conducteur électrique 11b entouré par au moins une première couche semi-conductrice (non représentée), une couche électriquement isolante 13b entourant la première couche semi-conductrice, et une seconde couche semi-conductrice 14b entourant la couche électriquement isolante.

Ce dispositif 101 comprend en outre une jonction 20 entourant lesdits câbles électriques 10a et 10b. Plus particulièrement, les câbles électriques 10a et 10b comprennent respectivement une extrémité 10'a et 10'b, destinée à être entourée par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b des câbles électriques 10a et 10b.

Cette jonction 20 permet de connecter électriquement le premier câble 10a au second câble 10b, notamment grâce à un connecteur électrique 24.

A ladite extrémité 10'a, 10'b de chaque câble électrique 10a, 10b, la seconde couche semi-conductrice 14a, 14b est au moins partiellement dénudée afin que la couche électriquement isolante 13a, 13b soit au moins partiellement positionnée à l'intérieur de la jonction 20, sans être recouverte de la seconde couche semi-conductrice 14a, 14b du câble.

L'extrémité 10'a du premier câble électrique comprend en outre une couche 15a piégeuse de charges d'espace (représentée en coupe longitudinale sur la figure 1) selon l'invention du type couche rubanée, remplaçant au moins en partie la seconde couche semi-conductrice 14a du câble électrique, et entourant la couche électriquement isolante 13a, de sorte que la couche 15a piégeuse de charges d'espace soit en contact physique avec la couche électriquement isolante 13a du câble électrique, et en contact physique avec les éléments semi-conducteurs 21 et 22 de la jonction 20. La couche 15a piégeuse de charges d'espace est en outre en contact physique avec ledit élément électriquement isolant 23 de l'accessoire.

L'extrémité 10'b du premier câble électrique comprend en outre une couche 15b piégeuse de charges d'espace (représentée en coupe longitudinale sur la figure 1) selon l'invention, remplaçant au moins en partie la seconde couche semi-conductrice 14b du câble électrique, et entourant la couche électriquement isolante 13b, de sorte que la couche 15b piégeuse de charges d'espace soit en contact physique avec la couche électriquement isolante 13b du câble électrique, et en contact physique avec les éléments semi-conducteurs 21 et 22 de la jonction 20. La couche 15b piégeuse de charges d'espace est en outre en contact physique avec ledit élément électriquement isolant 23 de l'accessoire.

Les couches 15a, 15b recouvrent en outre au moins en partie la seconde couche semi-conductrice 14a, 14b.

La figure 2a représente un dispositif 102 comprenant un unique câble électrique 10c comprenant un conducteur électrique 11c entouré par une première couche semi-conductrice 12c, une couche électriquement isolante 13c entourant la première couche semi-conductrice, et une seconde couche semi-conductrice 14c entourant la couche électriquement isolante.

Ce dispositif 102 comprend en outre une terminaison 30 entourant ledit câble électrique 10c. Plus particulièrement, le câble électrique 10c comprend une extrémité 10'c destinée à être entourée par la terminaison 30.

Le corps de la terminaison 30 comporte un élément semi-conducteur 31 et un élément électriquement isolant 32, ledit élément semi-conducteur 31 et ledit élément électriquement isolant 32 entourent l'extrémité 10'c du câble électrique 10c.

A ladite extrémité 10'c du câble électrique 10c, la seconde couche semi-conductrice 14c est au moins partiellement dénudée afin que la couche électriquement isolante 13c soit au moins partiellement positionnée à l'intérieur de la terminaison 30, sans être recouverte de la seconde couche semi-conductrice 14c du câble.

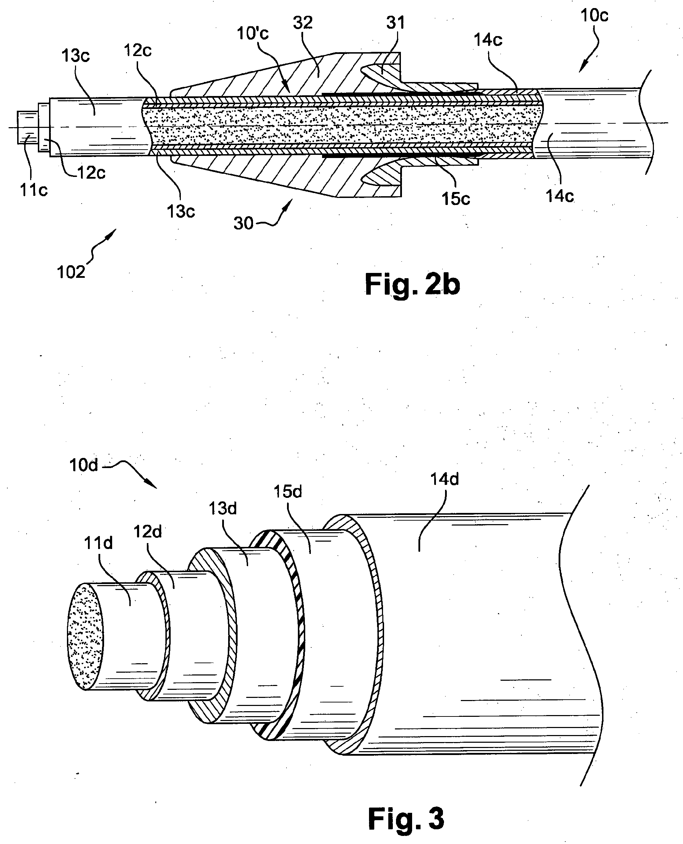

L'extrémité 10'c du câble électrique comprend en outre une couche 15c piégeuse de charges d'espace (représentée en coupe longitudinale sur la figure 2) selon l'invention du type couche rubanée, remplaçant au moins en partie la seconde couche semi-conductrice 14c du câble électrique, et entourant la couche électriquement isolante 13c, de sorte que la couche 15c piégeuse de charges d'espace soit en contact physique avec la couche électriquement isolante 13c du câble électrique, et en contact physique avec l'élément semi-conducteur 31 de la terminaison 30. La couche 15a piégeuse de charges d'espace est en outre en contact physique avec ledit élément électriquement isolant 32, et peut se prolonger au-delà de l'élément électriquement isolant 32.

La couche 15c recouvre en outre au moins en partie la seconde couche semi-conductrice 14c.

La figure 2b représente un dispositif 102 identique à celui représenté sur la figure 2a, excepté le positionnement de la couche 15c piégeuse de charges d'espace. En effet, la couche 15c ne recouvre pas la seconde couche semi-conductrice 14c, mais est recouverte en partie par la seconde couche semi-conductrice 14c. Elle est donc positionnée en partie entre la couche électriquement isolante 13c et la seconde couche semi-conductrice 14c.

Dans les figures 1, 2a et 2b, les différentes couches 15a, 15b, 15c piégeuses de charges d'espace sont respectivement positionnée entre la couche électriquement isolante 13a, 13b, 13c du câble électrique et l'élément semi-conducteur 22, 31 de l'accessoire pour câble électrique avec lequel il est associé.

La figure 3 représente un dispositif comprenant un câble électrique 10d. Ce câble électrique comprend un conducteur électrique central allongé 11d, entouré successivement et coaxialement par une première couche semi-conductrice, une couche électriquement isolante, une couche piégeuse de charges d'espace selon l'invention du type couche extrudée tout le long du câble, et une seconde couche semi-conductrice. La couche piégeuse de charges d'espace est en contact physique avec la couche électriquement isolante et la seconde couche semi-conductrice.

Les quatre couches de ce câble électrique sont des couches extrudées par des techniques bien connues de l'homme du métier.

A titre d'exemple, en considérant que la couche électriquement isolante des câbles électriques 10a, 10b, 10c et 10d est une couche polymérique réticulée à base d'un polyéthylène basse densité, les couches 15a, 15b, 15c et 15d piégeuses de charges d'espace sont obtenues à partir d'une composition polymérique comprenant :
- 97% en poids de polymère organique du type polymère d'éthylène basse densité (LDPE), commercialisé par la société INEOS sous la référence BPD 2000, avec une constante diélectrique ε égale à 2,3 ;
- 1% en poids de charge linéaire du type noir de carbone non sphérique, commercialisé par la société Cabot sous la référence VULCAN XC 72, avec une constante diélectrique ε égale à 105 ;
- 1% en poids de peroxyde organique ;
- 0.8% en poids de tri allyl cyanurate ; et
- 0,2% en poids d'antioxydant.

Pour les dispositifs des figures 1, 2a et 2b, cette composition polymérique est extrudée en bande d'une épaisseur de 1 mm, par des techniques bien connues de l'homme du métier. Une fois qu'au moins une des extrémités du câble électrique, destinée à être associée à l'accessoire, est dénudée (cf. la second couche semi-conductrice est partiellement dénudée pour avoir accès à la couche électriquement isolante), la bande est enroulée autour de la couche électriquement isolante du câble électrique, afin que la couche électriquement isolante du câble électrique ne puisse être en contact physique avec le ou les éléments semi-conducteurs de l'accessoire dans lequel l'extrémité du câble électrique est destinée à être positionnée. Elle est ensuite réticulée à chaud par des techniques bien connues de l'homme du métier. L'extrémité du câble électrique ainsi formé est positionnée à l'intérieur de l'accessoire en question.

Pour le dispositif de la figure 3, cette composition polymérique est extrudée avec une épaisseur d'environ 1 mm, autour de la couche électriquement isolante, afin de former une couche piégeuse de charges d'espace tout le long du câble électrique. La seconde couche semi-conductrice du câble est ensuite extrudée autour de cette couche piégeuse de charges d'espace. La couche piégeuse de charges d'espace peut être réticulée à chaud avant ou après l'extrusion de la seconde couche semi-conductrice par des techniques bien connues de l'homme du métier. Dans une variante de réalisation, au moins deux des quatre couches constitutives du câble électrique peuvent être co-extrudées autour du conducteur électrique du câble électrique.

La seconde couche semi-conductrice ainsi que la couche piégeuse de charges d'espace sont respectivement partiellement dénudées à l'une des extrémités du câble électrique, afin de permettre le positionnement dudit câble électrique à l'intérieur de l'accessoire en question.

## Revendications

1. Dispositif comprenant au moins un câble électrique (10a, 10b, 10c) pour le transport de courant continu, ledit câble électrique comprenant un conducteur électrique (11a, 11b, 11c) allongé entouré par au moins une première couche semi-conductrice (12c), une couche électriquement isolante (13a, 13b, 13c) entourant la première couche semi-conductrice, et une seconde couche semi-conductrice (14a, 14b, 14c) entourant la couche électriquement isolante, **caractérisé en ce que** le câble électrique (10a, 10b, 10c) comprend en outre une couche (15a, 15b, 15c) piégeuse de charges d'espace obtenue à partir d'une composition polymérique comprenant au moins un polymère organique et au moins une charge linéaire, la couche (15a, 15b, 15c) piégeuse de charges d'espace remplaçant au moins en partie la seconde couche semi-conductrice (14a, 14b, 14c) du câble électrique, de sorte que la couche piégeuse de charges d'espace soit en contact physique avec la couche électriquement isolante (13a, 13b, 13c) du câble électrique.

2. Dispositif selon la revendication 1, **caractérisé en ce que** lorsque le câble électrique est associé à un accessoire pour câble électrique, ledit accessoire comprenant au moins un élément semi-conducteur (21, 22, 31), la couche (15a, 15b, 15c) piégeuse de charges d'espace est destinée à être en contact physique au moins partiellement avec l'élément semi-conducteur de l'accessoire.

3. Dispositif comprenant un accessoire (20, 30) pour câble électrique pour le transport de courant continu, ledit accessoire comprenant au moins un élément semi-conducteur (21, 22, 31) et étant destiné à être associé à au moins un câble électrique (10a, 10b, 10c), ledit câble électrique comprenant un conducteur électrique (11a, 11b, 11c) entouré par au moins une première couche semi-conductrice (12c), une couche électriquement isolante (13a, 13b, 13c) entourant la première couche semi-conductrice, et une seconde couche semi-conductrice (14a, 14b, 14c) entourant la couche électriquement isolante, **caractérisé en ce que** l'accessoire (20, 30) comprend en outre une couche (15a, 15b, 15c) piégeuse de charges d'espace obtenue à partir d'une composition polymérique comprenant au moins un polymère organique et au moins une charge linéaire, la couche (15a, 15b, 15c) piégeuse de charges d'espace étant destinée à remplacer au moins en partie la seconde couche semi-conductrice (14a, 14b, 14c) du câble électrique, de sorte que la couche piégeuse de charges d'espace soit susceptible d'être en contact physique avec la couche électriquement isolante (13a, 13b, 13c) du câble électrique.

4. Dispositif selon la revendication 3, **caractérisé en ce que** la couche (15a, 15b, 15c) piégeuse de charges d'espace est en contact physique au moins partiellement avec l'élément semi-conducteur (21, 22, 31) de l'accessoire.

5. Dispositif comprenant au moins un câble électrique (10d) pour le transport de courant continu, ledit câble électrique comprenant un conducteur électrique (11d) allongé entouré par au moins une première couche semi-conductrice (12d), une couche électriquement isolante (13d) entourant la première couche semi-conductrice, et une seconde couche semi-conductrice (14d) entourant la couche électriquement isolante, **caractérisé en ce que** le câble électrique (10d) comprend en outre une couche (15d) piégeuse de charges d'espace entourant la couche électriquement isolante (13d), et étant entourée par la seconde couche semi-conductrice (14d), la couche piégeuse de charges d'espace étant obtenue à partir d'une composition polymérique comprenant au moins un polymère organique et au moins une charge linéaire.

6. Dispositif selon la revendication 5, caractérisé la couche (15d) piégeuse de charges d'espace s'étend tout le long du câble électrique (10d).

7. Dispositif selon la revendication 5 ou 6, **caractérisé en ce que** la couche (15d) piégeuse de charges d'espace est en contact physique avec la couche électriquement isolante (13d) et avec la seconde couche semi-conductrice (14d).

8. Dispositif selon l'une quelconque des revendications 5 à 7, **caractérisé en ce que** lorsque le câble électrique est associé à un accessoire pour câble électrique, ledit accessoire comprenant au moins un élément semi-conducteur, la couche piégeuse de charges d'espace est destinée à être en contact physique au moins partiellement avec l'élément semi-conducteur de l'accessoire.

9. Dispositif selon l'une quelconque des revendications 2 à 4 et 8, **caractérisé en ce que** la couche piégeuse de charges d'espace est destinée à être positionnée entre la couche électriquement isolante du câble électrique et l'élément semi-conducteur de l'accessoire pour câble électrique.

10. Dispositif selon l'une quelconque des revendications précédentes, **caractérisé en ce que** la charge linéaire est un matériau ayant une constante diélectrique ε qui est au moins supérieure à celle du ou des polymère(s) organique(s) de la composition polymérique.

11. Dispositif selon l'une quelconque des revendications précédentes, **caractérisé en ce que** la charge linéaire est un matériau ayant une constante diélectrique ε qui est au moins deux fois supérieure à celle du ou des polymère(s) organique(s) de la composition polymérique.

12. Dispositif selon l'une quelconque des revendications précédentes, **caractérisé en ce que** la charge linéaire est une charge hygroscopique.

13. Dispositif selon l'une quelconque des revendications précédentes, **caractérisé en ce que** la charge linéaire comprend des nanoparticules.

14. Dispositif selon la revendication 13, **caractérisé en ce que** la charge linéaire est du noir de carbone.

15. Dispositif selon l'une quelconque des revendications précédentes, **caractérisé en ce que** la charge linéaire comprend un polymère différent du polymère organique.

16. Dispositif selon l'une quelconque des revendications précédentes, **caractérisé en ce que** le polymère organique et la charge linéaire forment un polymère organique fonctionnalisé.

17. Dispositif selon l'une quelconque des revendications précédentes, **caractérisé en ce que** la couche piégeuse de charges d'espace a une résistivité d'au moins 10¹³ Ω.m à 20°C, et de préférence d'au moins 10¹⁸ Ω.m à 20°C.

18. Dispositif selon l'une quelconque des revendications précédentes, **caractérisé en ce que** la composition polymérique comprend au plus 10% en poids de charge linéaire.

19. Dispositif selon l'une quelconque des revendications précédentes, **caractérisé en ce que** la couche piégeuse de charges d'espace est de même nature polymérique que celle de la couche électriquement isolante du câble.

20. Dispositif selon l'une quelconque des revendications précédentes, **caractérisé en ce que** la couche piégeuse de charges d'espace a une épaisseur d'au moins 0,5 mm.

21. Dispositif selon l'une quelconque des revendications précédentes, **caractérisé en ce que** l'accessoire pour câble électrique entoure une extrémité dudit câble.

22. Dispositif selon l'une quelconque des revendications précédentes, **caractérisé en ce que** l'accessoire pour câble électrique est une jonction (20) ou une terminaison (30).

## Patentansprüche

1. Vorrichtung, umfassend mindestens ein Stromkabel (10a, 10b, 10c) für den Transport von Gleichstrom, wobei das Stromkabel einen länglichen elektrischen Leiter (11a, 11b, 11c), der von mindestens einer ersten halbleitenden Schicht (12c) umgeben ist, wobei eine elektrisch isolierende Schicht (13a, 13b, 13c) die erste halbleitenden Schicht umgibt, und eine zweite halbleitenden Schicht (14a, 14b, 14c), welche die elektrisch isolierende Schicht umgibt, umfasst, **dadurch gekennzeichnet, dass** das Stromkabel (10a, 10b, 10c) ferner eine Ladungsblockierungsschicht (15a, 15b, 15c) umfasst, die aus einer Polymerzusammensetzung hergestellt ist, die mindestens ein organisches Polymer und mindestens eine lineare Ladung umfasst, wobei die Ladungsblockierungsschicht (15a, 15b, 15c) die zweite halbleitende Schicht (14a, 14b, 14c) des Stromkabels mindestens zum Teil ersetzt, so dass die Ladungsblockierungsschicht mit der elektrisch isolierenden Schicht (13a, 13b, 13c) des Stromkabels in physischem Kontakt ist.

2. Vorrichtung nach Anspruch 1, **dadurch gekennzeichnet, dass**, wenn das Stromkabel einem Zubehör für Stromkabel zugeordnet ist, das Zubehör mindestens ein halbleitendes Element (21, 22, 31) umfasst, wobei die Ladungsblockierungsschicht (15a, 15b, 15c) bestimmt ist, mit dem halbleitenden Element des Zubehörs mindestens teilweise in physischem Kontakt zu sein.

3. Vorrichtung, umfassend ein Zubehör (20, 30) für Stromkabel für den Transport von Gleichstrom, wobei das Zubehör mindestens ein halbleitendes Element (21, 22, 31) umfasst und bestimmt ist, mindestens einem Stromkabel (10a, 10b, 10c) zugeordnet zu sein, wobei das Stromkabel einen elektrischen Leiter (11a, 11b, 11c), der von mindestens einer ersten halbleitenden Schicht (12c) umgeben ist, wobei eine elektrisch isolierende Schicht (13a, 13b, 13c) die erste halbleitenden Schicht umgibt, und eine zweite halbleitenden Schicht (14a, 14b, 14c), welche die elektrisch isolierende Schicht umgibt, umfasst, **dadurch gekennzeichnet, dass** das Zubehör (20, 30) ferner eine Ladungsblockierungsschicht (15a, 15b, 15c) umfasst, die aus einer Polymerzusammensetzung hergestellt ist, die mindestens ein organisches Polymer und mindestens eine lineare Ladung umfasst, wobei die Ladungsblockierungsschicht (15a, 15b, 15c) bestimmt ist, die zweite halbleitende Schicht (14a, 14b, 14c) des Stromkabels mindestens zum Teil zu ersetzen, so dass die Ladungsblockierungsschicht imstande ist, mit der elektrisch isolierenden Schicht (13a, 13b, 13c) des Stromkabels in physischem Kontakt zu sein.

4. Vorrichtung nach Anspruch 3, **dadurch gekennzeichnet, dass** die Ladungsblockierungsschicht (15a, 15b, 15c) mit dem halbleitenden Element (21, 22, 31) des Zubehörs mindestens teilweise in physischem Kontakt ist.

5. Vorrichtung, umfassend mindestens ein Stromkabel (10d) für den Transport von Gleichstrom, wobei das Stromkabel einen länglichen elektrischen Leiter (11d), der von mindestens einer ersten halbleitenden Schicht (12d) umgeben ist, wobei eine elektrisch isolierende Schicht (13d) die erste halbleitenden Schicht umgibt, und eine zweite halbleitenden Schicht (14d), welche die elektrisch isolierende Schicht umgibt, umfasst, **dadurch gekennzeichnet, dass** das Stromkabel (10d) ferner eine Ladungsblockierungsschicht (15d) umfasst, welche die elektrisch isolierende Schicht (13d) umgibt, und von der zweiten halbleitenden Schicht (14d) umgeben ist, wobei die Ladungsblockierungsschicht aus einer Polymerzusammensetzung hergestellt ist, die mindestens ein organisches Polymer und mindestens eine lineare Ladung umfasst.

6. Vorrichtung nach Anspruch 5, **dadurch gekennzeichnet, dass** sich die Ladungsblockierungsschicht (15d) entlang der gesamten Länge des Stromkabels (10d) erstreckt.

7. Vorrichtung nach Anspruch 5 oder 6, **dadurch gekennzeichnet, dass** die Ladungsblockierungsschicht (15d) in physischem Kontakt mit der elektrisch isolierenden Schicht (13d) und mit der zweiten halbleitenden Schicht (14d) ist.

8. Vorrichtung nach einem der Ansprüche 5 bis 7, **dadurch gekennzeichnet, dass**, wenn das Stromkabel einem Zubehör für Stromkabel zugeordnet ist, das Zubehör mindestens ein halbleitendes Element umfasst, wobei die Ladungsblockierungsschicht bestimmt ist, mit dem halbleitenden Element des Zubehörs mindestens teilweise in physischem Kontakt zu sein.

9. Vorrichtung nach einem der Ansprüche 2 bis 4 und 8, **dadurch gekennzeichnet, dass** die Ladungsblockierungsschicht bestimmt ist, zwischen der elektrisch isolierenden Schicht des Stromkabels und dem halbleitenden Element des Zubehörs für Stromkabel positioniert zu sein.

10. Vorrichtung nach einem der vorangehenden Ansprüche, **dadurch gekennzeichnet, dass** die lineare Ladung ein Werkstoff ist, der eine dielektrische Konstante ε hat, die mindestens größer ist als die des oder der organischen Polymers/Polymere der Polymerzusammensetzung.

11. Vorrichtung nach einem der vorangehenden Ansprüche, **dadurch gekennzeichnet, dass** die lineare Ladung ein Werkstoff ist, der eine dielektrische Konstante ε hat, die mindestens zwei Mal größer ist als die des oder der organischen Polymers/Polymere der Polymerzusammensetzung.

12. Vorrichtung nach einem der vorangehenden Ansprüche, **dadurch gekennzeichnet, dass** die lineare Ladung eine hygroskopische Ladung ist.

13. Vorrichtung nach einem der vorangehenden Ansprüche, **dadurch gekennzeichnet, dass** die lineare Ladung Nanopartikel umfasst.

14. Vorrichtung nach Anspruch 13, **dadurch gekennzeichnet, dass** die lineare Ladung Karbonschwarz ist.

15. Vorrichtung nach einem der vorangehenden Ansprüche, **dadurch gekennzeichnet, dass** die lineare Ladung ein Polymer umfasst, das sich vom organischen Polymer unterscheidet.

16. Vorrichtung nach einem der vorangehenden Ansprüche, **dadurch gekennzeichnet, dass** das organische Polymer und die lineare Ladung ein funktionalisiertes organisches Polymer bilden.

17. Vorrichtung nach einem der vorangehenden Ansprüche, **dadurch gekennzeichnet, dass** die Ladungsblockierungsschicht eine Resistivität von mindestens 10¹³ Ω.m bei 20 °C und vorzugsweise von mindestens 10¹⁸ Ω.m bei 20 °C hat.

18. Vorrichtung nach einem der vorangehenden Ansprüche, **dadurch gekennzeichnet, dass** die Polymerzusammensetzung höchstens 10 Gew.-% lineare Ladung umfasst.

19. Vorrichtung nach einem der vorangehenden Ansprüche, **dadurch gekennzeichnet, dass** die Ladungsblockierungsschicht dieselbe Polymernatur wie die der elektrisch isolierenden Schicht des Kabels hat.

20. Vorrichtung nach einem der vorangehenden Ansprüche, **dadurch gekennzeichnet, dass** die Ladungsblockierungsschicht eine Dicke von mindestens 0,5 mm hat.

21. Vorrichtung nach einem der vorangehenden Ansprüche, **dadurch gekennzeichnet, dass** das Zubehör für Stromkabel ein Ende des Kabels umgibt.

22. Vorrichtung nach einem der vorangehenden Ansprüche, **dadurch gekennzeichnet, dass** das Zubehör für Stromkabel eine Verbindung (20) oder ein Leitungsende (30) ist.

## Claims

1. A device comprising at least one electric cable (10a, 10b, 10c) for conveying direct current, said electric cable comprising an elongated electric conductor (11a, 11b, 11c) surrounded by at least one first semiconducting layer (12c), one electrically insulating layer (13a, 13b, 13c) surrounding the first semiconducting layer, and a second semiconducting layer (14a, 14b, 14c) surrounding the electrically insulating layer, **characterized in that** the electric cable (10a, 10b, 10c) further comprises a space charge trapping layer (15a, 15b, 15c) obtained from a polymeric composition comprising at least one organic polymer and at least one linear filler, the space charge trapping layer (15a, 15b, 15c) replacing at least partly the second semiconducting layer (14a, 14b, 14c) of the electric cable, so that the space charge trapping layer is in physical contact with the electrically insulating layer (13a, 13b, 13c) of the electric cable.

2. The device according to claim 1, **characterized in that**, when the electric cable is associated with an accessory for an electric cable, said accessory comprising at least one semiconducting element (21, 22, 31), the space charge trapping layer (15a, 15b, 15c) is intended to be in physical contact at least partly with the semiconducting element of the accessory.

3. A device comprising an accessory (20, 30) for an electric cable for the conveyance of direct current, said accessory comprising at least one semiconducting element (21, 22, 31), and be intended to be associated with at least one electric cable (10a, 10b, 10c), said electric cable comprising an electric conductor (11a, 11b, 11c) surrounded by at least one first semiconducting layer (12c), an electrically insulating layer (13a, 13b, 13c) surrounding the first electrically insulating layer, and a second semiconducting layer (14a, 14b, 14c) surrounding the electrically insulating layer, **characterized in that** the accessory (20, 30) further comprises a space charge trapping layer (15a, 15b, 15c) obtained from a polymeric composition comprising at least one organic polymer and at least one linear filler, the space charge trapping layer (15a, 15b, 15c) being intended to replace at least partly the second semiconducting layer (14a, 14b, 14c) of the electric cable, so that the space charge trapping layer (15a, 15b, 15c) may be in physical contact with the electrically insulating layer (13a, 13b, 13c) of the electric cable.

4. The device according to claim 3, **characterized in that** the space charge trapping layer (15a, 15b, 15c) is in the physical contact at least partly with the semiconducting element (21, 22, 31) of the accessory.

5. A device comprising at least one electric cable (10d) for conveying direct current, said electric cable comprising an elongated electric conductor (11d) surrounded by at least one first semiconducting layer (12d), an electrically insulating layer (13d) surrounding the semiconducting layer, and a second semiconducting layer (14d) surrounding the electrically insulating layer, **characterized in that** the electric cable (10d) further comprises a space charge trapping layer (15d) surrounding the electrically insulating layer (13d), and being surrounded by the second semiconducting layer (14d), the space charge trapping layer being obtained from a polymeric composition comprising at least one organic polymer and at least one linear filler.

6. The device according to claim 5, **characterized in that** the space charge trapping layer (15d) extends all along the electric cable (10d).

7. The device according to claim 5 or 6, **characterized in that** the space charge trapping layer (15d) is in physical contact with the electrically insulating layer (13d) and with the second semiconducting layer (14d).

8. The device according to any of claims of 5 to 7, **characterized in that**, when the electric cable is associated with an accessory for an electric cable, said accessory comprising at least one semiconducting element, the space charge trapping layer is intended to be in physical contact at least partly with the semiconducting element of the accessory.

9. The device according to any of claims 2 to 4 and 8, **characterized in that** the space charge trapping layer is intended to be positioned between the electrically insulating layer of the electric cable and the semiconducting element of the accessory for an electric cable.

10. The device according to any of the preceding claims, **characterized in that** the linear filler is a material having a dielectric constant ε which is at least greater than that of the organic polymer(s) of the polymeric composition.

11. The device according to any of the preceding claims, **characterized in that** the linear filler is a material having a dielectric constant ε which is at least twice greater than that of the organic polymer(s) of the polymeric composition.

12. The device according to any of the preceding claims, **characterized in that** the linear filler is a hygroscopic filler.

13. The device according to any of the preceding claims, **characterized in that** the linear filler comprises nanoparticles.

14. The device according to claim 13, **characterized in that** the linear filler is carbon black.

15. The device according to any of the preceding claims, **characterized in that** the linear filler comprises a polymer different from the organic polymer.

16. The device according to any of the preceding claims, **characterized in that** the organic polymer and the linear filler form a functionalized organic polymer.

17. The device according to any of the preceding claims, **characterized in that** the space charge trapping layer has a resistivity of at least 10¹³ **Ω.**m at 20°C, and preferably at least 10¹⁸ **Ω.**m at 20°C.

18. The device according to any of the preceding claims, **characterized in that** the polymeric composition comprises at most 10% by weight of linear filler.

19. The device according to any of the preceding claims, **characterized in that** the space charge trapping layer is of the same polymeric nature as that of the electrically insulating layer of the cable.

20. The device according to any of the preceding claims, **characterized in that** the space charge trapping layer has a thickness of at least 0.5 mm.

21. The device according to any of the preceding claims, **characterized in that** the accessory for an electric cable surrounds one end of said cable.

22. The device according to any of the preceding claims, **characterized in that** the accessory for an electric cable is a junction (20) or an ending (30).
